# EUROPÄISCHE PATENTSCHRIFT

(11) **EP 0 618 018 B1**
(45) Veröffentlichungstag und Bekanntmachung des Hinweises auf die Patenterteilung: **08.08.2001**
(21) Anmeldenummer: 94104541.1
(22) Anmeldetag: 23.03.1994
(51) Int. Cl.: B21B 1/36

(54) **Reversierende Kompaktanlage zum Kaltwalzen von bandförmigem Walzgut**
Reversing compact installation for cold-rolling of striplike products
Installation compacte réversible pour laminer à froid de matières à laminer en forme de feuillard

(30) Priorität: 27.03.1993 DE 4310063
(43) Veröffentlichungstag der Anmeldung: 05.10.1994
(73) Patentinhaber: SMS Demag AG, 40237 Düsseldorf (DE)
(72) Erfinder: Klamma, Klaus, D-57271 Hilchenbach (DE); Bald, Wilfried, D-57271 Hilchenbach (DE)
(74) Vertreter: Valentin, Ekkehard, Dipl.-Ing.

(56) Entgegenhaltungen:
- DD-A- 109 532
- US-A- 1 964 503
- PATENT ABSTRACTS OF JAPAN vol. 5, no. 119 (M-81) 1981 & JP-A-56 059 507 (SHIN NIPPON SEITETSU)
- PATENT ABSTRACTS OF JAPAN vol. 15, no. 354 (M-1155) 1991 & JP-A-31 038 004 (HITACHI)

## Beschreibung

Die Erfindung betrifft eine Anlage zum Kaltwalzen von bandförmigem Walzgut mit einem, zwischen zwei Reversierhaspeln angeordneten Reversiergerüst und einem Haspel, von dem das Einsatzband abwickelbar ist.

Es ist bekannt, derartige eingerüstige Reversierstraßen zum Kaltwalzen von bandförmigem Walzgut einzusetzen. Mit einer solchen eingerüstigen Reversierstraße lassen sich bis ca. 450.000 t/Jahr warmgewalzten Bandes kaltwalzen. Haben Stahlwerke einen größeren Ausstoß an warmgewalztem Band, so konnte bisher das über ca. 450.000 t/Jahr hinausgehende warmgewalzte Band nicht kaltgewalzt werden, oder es mußte eine zweite eingerüstige Reversierstraße eingerichtet werden.

Eine weitere Möglichkeit bestand darin, eine ebenfalls bekannte, mehrgerüstige, z. B. vier- oder fünfgerüstige Tandemstraße vorzusehen, die jedoch erst ab 1 Mio. t/Jahr wirtschaftlich arbeitet.

Bei den sogenannten "Mini-Stahlwerken", die einen Ausstoß von ca. 700.000 t/Jahr haben, lohnt sich demnach der Einsatz einer viergerüstigen Tandemstraße zum Kaltwalzen des Bandes aus wirtschaftlichen Gründen nicht. Die eingerüstige Reversierstraße zum Kaltwalzen des Bandes reicht dagegen nicht aus, um den gesamten Ausstoß eines "Mini-Stahlwerkes" zu Kaltband zu walzen.

Auch die Lösung, zwei eingerüstige Reversierstraßen in einem "Mini-Stahlwerk" vorzusehen, ist kostenintensiv, da diese beiden Straßen nicht voll ausgelastet werden, ein verhältnismäßig hoher Anlagenaufwand betrieben werden muß und ein großer Platzbedarf für die beiden Straßen entsteht.

Ein weiterer Nachteil eines einzelnen Reversiergerüstes gegenüber mehrgerüstigen Anlagen ist in der fehlenden Möglichkeit des Einsatzes einer aufgerauhten Walze im letzten Stich zu sehen.

Aus der JP-A-3-138004 ist eine zweigerüstige Reversierstraße bekannt. Bei dieser Anlage wird jedoch mit an den Bandanfang und an das Bandende anzuschweißenden Ansatzteilen gearbeitet. Durch diesen zeitaufwendigen Schweißvorgang kann die Reversieranlage nicht ca. 700 000 t/Jahr Kaltband erstellen. Hinzu kommt, daß bedingt durch die Ansatzteile ein Bandspeicher notwendig wird, welcher die zweigerüstige Reversierstraße erheblich verteuert.

Die JP-A-56-59507 offenbart ebenfalls eine zweigerüstige Reversierstraße, der jedoch zwei Haspelpaare zugeordnet sind. Das zweite Haspelpaar ist notwendig, um während der Stillstandzeit des ersten Haspels, in der die zu walzenden silizierten Stahlbleche altern müssen, die Reversieranlage weiter betreiben zu können. Ein Reversiervorgang wird erst notwendig, wenn jeweils zwei Coils die Reversierstraße in eine Richtung passiert haben.

Der Erfindung liegt daher die Aufgabe zugrunde, eine Kaltwalzstraße für ein breitgefächertes Sortiment bandförmigen Walzgutes vorzuschlagen, die eine Jahreskapazität von ca. 700.000 t kaltgewalzten Bandes aufweist und die sich damit optimal für den Einsatz in "Mini-Stahlwerken", das heißt im Produktionsbereich zwischen einem Reversiergerüst und einer Tandemstraße, eignet.

Diese Aufgabe wird durch eine Anlage zum Kaltwalzen von bandförmigem Walzgut, die die Merkmale des Anspruchs 1 aufweist, gelöst. Üblicherweise wird warmgewalztes Band in mehreren Stichen kaltgewalzt. Bei einer mehrgerüstigen Tandemstraße werden diese Stiche in einem Durchlauf gewalzt, während bei einer eingerüstigen Reversierstraße drei bis sieben Durchläufe erfolgen müssen.

Bei der erfindungsgemäßen zweigerüstigen Reversierstraße werden dagegen nur zwei bis drei Durchläufe benötigt, so daß gegenüber der eingerüstigen Reversierstraße in gleicher Zeit ein größerer Durchsatz erreicht wird. Die hier vorgeschlagene Anlage ist erheblich kostengünstiger als zwei eingerüstige Reversierstraßen. Auch der Platzbedarf ist bei der vorgeschlagenen zweigerüstigen Reversierstraße geringer als bei zwei z. B. parallel zueinander angeordneten eingerüstigen Reversierstraßen. Hinzu kommt, daß die zweigerüstige Reversierstraße in Linie mit vor der Straße angeordneten Bandbehandlungsstationen liegen kann, wohingegen die beiden eingerüstigen Reversierstraßen, die für einen Ausstoß von ca. 700.000 t benötigt werden, stets über Weichen oder Verschiebevorrichtungen mit Coils warmgewalzten Bandes versorgt werden müssen. Wesentlich ist auch, daß gegenüber eingerüstigen Reversierstraßen ein erheblich höheres Bandzugniveau erreicht wird, so daß das Reduzierverhalten einer vier- bis sechsgerüstigen Tandemstraße erreicht werden kann. Hinzu kommt, daß sich ein Arbeitswalzenwechsel, wegen der schleppangetriebenen Arbeitswalzen erheblich einfacher und schneller gestaltet, was wiederum einem größeren Durchsatz zugute kommt.

Die Merkmale der Unteransprüche gewährleisten weiterhin einerseits eine Beschleunigung des Walzvorgangs, so daß mit der vorgeschlagenen Anlage ein Durchsatz von 700.000 t/Jahr sicher erreicht wird und andererseits, daß das Sortiment des Kaltbandes eine große Anzahl unterschiedlicher Güten enthalten kann.

Ein Ausführungsbeispiel der Erfindung wird anhand einer Zeichnung näher erläutert. Dabei zeigen:
- Figur 1: die Schemadarstellung einer erfindungsgemäßen zweigerüstigen Reversierstraße,
- Figur 2: einen Querschnitt durch die erfindungsgemäße zweigerüstige Reversierstraße und
- Figur 3: eine zweigerüstige Reversierstraße im Anschluß an eine Schubbeize.

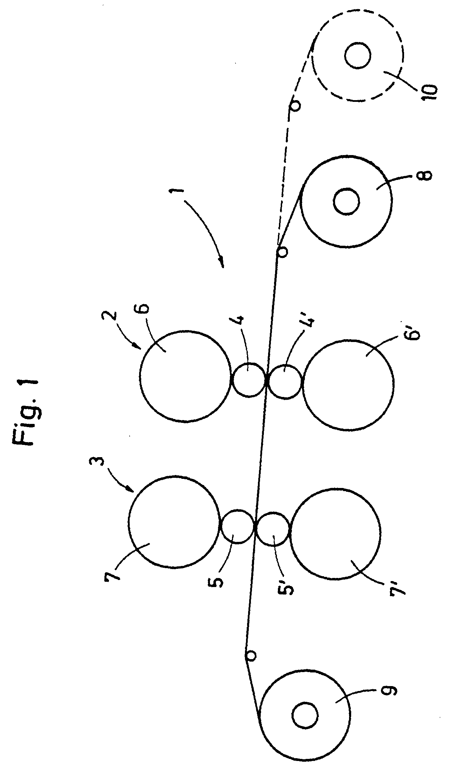

Figur 1 zeigt eine Kaltwalzstraße 1, die aus zwei Reversiergerüsten 2, 3 besteht. Es handelt sich hier z. B. um Quartogerüste mit Arbeitswalzen 4, 4'; 5, 5' und Stützwalzen 6, 6'; 7, 7'. Die beiden Reversiergerüste 2, 3 sind zwischen zwei Haspeln 8, 9 angeordnet, die den notwendigen Zug für das Auf/Abwickeln im Reversierbetrieb aufzubringen vermögen.

Ein Haspel 10 dient zum Abhaspeln des warmgewalzten Bandes zum ersten Stich und ggfs. zum Aufwickeln des warmgewalzten Bandes von einer vorherliegenden Bearbeitungslinie. Der Haspel 10 kann gegenüber den Haspeln 8, 9 mit niedrigerer Zugkraft arbeiten. Am Haspel 10 kann das abzuwickelnde Band während des Reversiervorganges, bei dem die Haspel 8 und 9 benutzt werden, bereits soweit vorbereitet werden, daß im Anschluß an einen Walzvorgang ohne große Verzögerungen das nächste Band gewalzt werden kann.

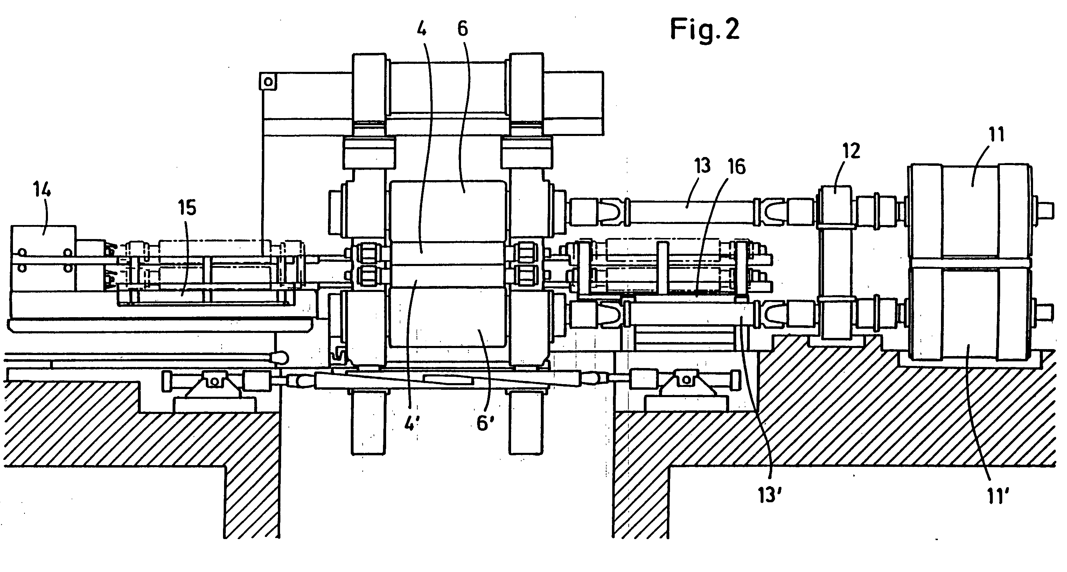

Figur 2 zeigt, daß es sich bei den Arbeitswalzen 4, 4' (5, 5') um schleppangetriebe Walzen handelt. Antriebe 11, 11' arbeiten über ein Getriebe 12 und Spindeln 13, 13' auf die Stützwalzen 6, 6' (7, 7'). Eine Walzenwechselvorrichtung 14 schiebt beim Arbeitswalzenwechsel den neuen, vorbereiteten Arbeitswalzensatz vom Wechseltisch 15 in das Gerüst 2 (3) ein. Die im Gerüst 2 befindlichen Arbeitswalzen werden dabei auf den Ablagetisch 16 geschoben. Dadurch ist ein schneller Arbeitswalzenwechsel möglich. Es lassen sich z. B. drei oder fünf Stiche mit einem Arbeitswalzensatz und der jeweils letzte Stich (z. B. Stich 4 oder Stich 6) nach erfolgtem Arbeitwalzenschnellwechsel mit einem Arbeitswalzensatz anderer Rauhigkeit durchführen.

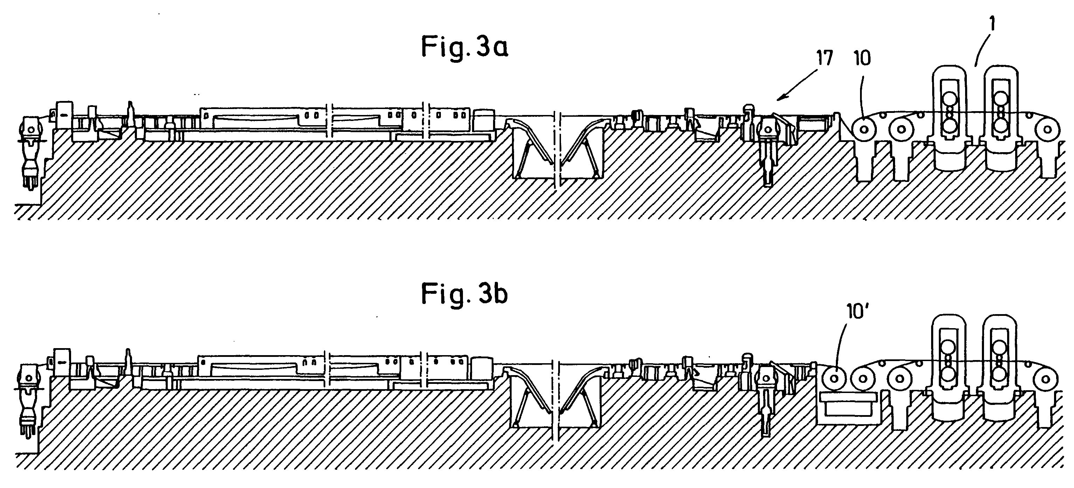

Die Figuren 3a und 3b zeigen die zweigerüstige Reversierkaltstraße im Anschluß an eine Schubbeize 17. In Figur 3a ist der Haspel 10 zu erkennen, der das aus der Beize 17 kommende Band aufwickelt, während in der Kaltwalzstraße 1 das vorhergehende Band reversierend gewalzt wird. Daran anschließend dient der Haspel 10 zum Abwickeln des Bandes in die Kaltwalzstraße.

Figur 3b zeigt, daß es sich bei dem Haspel 10 um einen Wendehaspel 10' handelt, der ein gleichzeitiges Auf- und Abwickeln einerseits von der Schubbeize kommend, andererseits zur Kaltwalzstraße 1 abgebend erlaubt.

## Patentansprüche

1. Anlage zum Kaltwalzen von bandförmigem Walzgut mit zwei zwischen zwei Reversierhaspeln (8, 9) ohne Zwischenschaltung weiterer Einrichtungen einander zugeordneten Reversiergerüsten (2, 3) und einem Haspel (10), von dem das Einsatzband abwickelbar ist, wobei zur Durchführung des Walzvorganges beide Reversiergerüste (2, 3) entsprechend aufeinanderfolgenden Stichen gleichzeitig angestellt sind und wobei die Reversiergerüste (2, 3) mit Arbeitswalzenschnellwechselvorrichtungen (14, 15, 16) ausgestattet sind, über die die mit in Kassettenbauweise aufgebauten Arbeitswalzen-Einbaustücken versehenen Arbeitswalzen im Durchschiebebetrieb gewechselt werden können, und wobei ein Wechsel gegen Arbeitswalzen (4, 4'; 5, 5') unterschiedlichen Durchmessers und/oder unterschiedlicher Oberflächenrauhigkeit möglich ist.

2. Anlage nach Anspruch 1,
**dadurch gekennzeichnet,**
daß es sich bei den Reversiergerüsten (2, 3) um Quartogerüste handelt, deren Stützwalzen (6, 6'; 7, 7') angetrieben sind, und deren Arbeitswalzen (4, 4'; 5, 5') oder Stützwalzen zum Zwecke der horizontalen Stabilisierung aus der durch einen Arbeitswalzensatz (4, 4' oder 5, 5') bzw. Stützwalzensatz (6, 6' oder 7, 7') gebildeten Vertikalebene in horizontaler Richtung verschiebbar sind.

3. Anlage nach Anspruch 1,
**dadurch gekennzeichnet,**
daß es sich bei den Reversiergerüsten um Sextogerüste handelt, deren Zwischenwalzen angetrieben sind, und deren Arbeitswalzen oder Zwischenwalzen zum Zwecke der horizontalen Stabilisierung aus der durch einen Arbeitswalzensatz bzw. Zwischenwalzensatz gebildeten Vertikalebene in horizontaler Richtung verschiebbar sind.

4. Anlage nach Anspruch 1 oder 2,
**dadurch gekennzeichnet,**
daß die Arbeitwalzen (4, 4'; 5, 5') und/oder die Stützwalzen (6, 6'; 7, 7') mit Antrieben für die Axialverschiebung ausgestattet sind, und daß die verschiebbaren Walzen vorzugsweise "CVC"-Schliff aufweisen.

5. Anlage nach Anspruch 1 oder 3,
**dadurch gekennzeichnet,**
daß die Arbeitswalzen und/oder die Zwischenwalzen mit Antrieben für die Axialverschiebung ausgestattet sind, und daß die verschiebbaren Walzen vorzugsweise "CVC"-Schliff aufweisen.

6. Anlage nach einem der Ansprüche 1 bis 5,
**dadurch gekennzeichnet**,
daß dem Haspel (10, 10') eine Schubbeize (17) vorgeordnet ist.

7. Anlage nach einem der Ansprüche 1 bis 6,
**dadurch gekennzeichnet**,
daß es sich beim Haspel (10, 10') um einen Wendehaspel (10') handelt.

8. Verfahren zum reversierenden Kaltwalzen von bandförmigem Walzgut in einer Anlage mit zwei zwischen zwei Reversierhaspeln (8, 9) angeordneten Reversiergerüsten (2, 3) und einem Haspel (10), von dem das Einsatzband abwickelbar ist, wobei zur Durchführung des Walzvorganges beide Reversiergerüste (2, 3) entsprechend aufeinanderfolgenden Stichen gleichzeitig angestellt sind, und das Einsatzband vom Haspel (10) abgewickelt und in den ohne Zwischenschaltung weiterer Einrichtungen einander zugeordneten Reversiergerüsten (2, 3) in jeweils einem Stich gewalzt wird, wobei zwischen den Reversiergerüsten (2, 3) ein dem Reduzierverhalten einer vier- bis sechsgerüstigen Tandemstraße entsprechendes hohes Bandzugniveau eingestellt ist und das das Reversiergerüst (3) verlassende Band auf den zugehörigen Reversierhaspel (9) aufgewickelt wird, wobei nach Abwickeln des Einsatzbandes vom Haspel (10) die Reversiergerüste (2, 3) und dieser Reversierhaspel (9) reversiert werden und anschließend das Band vom diesem Reversierhaspel (9) abgewickelt, in den Reversiergerüsten (3, 2) gewalzt und auf den anderen Reversierhaspel (8) aufgewickelt wird, wobei zwischen den Reversiergerüsten (3, 2) das hohe Bandzugniveau eingestellt ist, und wobei nach Abwickeln des Bandes vom ersten Reversierhaspel (9) die Reversiergerüste (3, 2) und die beiden Reversierhaspel (9, 8) reversiert werden.

## Claims

1. Plant for cold-rolling strip-shaped roll stock, comprising two reversing stands (2, 3), which are arranged between two reversing reel devices (8, 9) without interposition of further devices, and a reel device (10), from which the charge strip can be unreeled, wherein for the performance of the rolling process the two reversing stands (2, 3) are simultaneously adjusted in correspondence with successive passes and wherein the reversing stands (2, 3) are equipped with working roll quick-change devices (14, 15, 16), by way of which the working rolls, which are provided with working roll chocks in modular mode of construction can be changed in pushing-through operation, and wherein a change for working rolls (4, 4'; 5, 5') of different diameter and/or different surface roughness is possible.

2. Plant according to claim 1, characterised in that the reversing stands (2, 3) are four-high stands, the backing rolls (6, 6'; 7, 7') of which are driven and the working rolls (4, 4'; 5, 5') or backing rolls of which are for the purpose of horizontal stabilisation displaceable in horizontal direction out of the vertical plane formed by a working roll set (4, 4' or 5, 5') or backing roll set (6, 6' or 7, 7').

3. Plant according to claim 1, characterised in that the reversing stands (2, 3) are six-high stands, the intermediate rolls of which are driven and the working rolls or intermediate rolls of which are for the purpose of horizontal stabilisation displaceable in horizontal direction out of the vertical plane formed by a working roll set or intermediate roll set.

4. Plant according to claim 1 or 2, characterised in that the working rolls (4, 4'; 5, 5') and/or the backing rolls (6, 6'; 7, 7') are equipped with drives for the axial displacement and that the displaceable rolls preferably have 'CVC' [continuously variable crown] surface grinding.

5. Plant according to claim 1 or 3, characterised in that the working rolls and/or the intermediate rolls are equipped with drives for the axial displacement and that the displaceable rolls preferably have 'CVC' [continuously variable crown] surface grinding.

6. Plant according to one of claims 1 to 5, characterised in that a thrust pickling device (17) is arranged upstream of the reel device (10, 10').

7. Plant according to one of claims 1 to 6, characterised in that the reel device (10, 10') is a reversing reel device (10').

8. Method of reversible cold-rolling strip-shaped roll stock in a plant comprising two reversing stands (2, 3) and a reel device (10), from which the charge strip can be unreeled, wherein for the performance of the rolling process the two reversing stands (2, 3) are simultaneously adjusted in correspondence with successive passes and the charge strip is unreeled from the reel device (10) and is rolled in the reversing stands (2, 3), which are associated with one another without interposition of further devices, each time in one pass, wherein a high strip tension level corresponding to the reducing behaviour of a fourstand or six-stand tandem rolling train is set between the reversing stands (2, 3) and the strip leaving the reversing stand (3) is reeled up on the associated reversing reel device (9), wherein after unreeling of the charge strip from the reel device (10) the reversing stands (2, 3) and this reversing reel device (9) are reversed and subsequently the strip is unreeled from this reversing reel device (9), rolled in the reversing stands (3, 2) and reeled up on the other reversing reel device (8), wherein the high strip tension level is set between the reversing stands (3, 2) and wherein after unreeling the strip from the first reversing reel device (9) the reversing stands (3, 2) and the two reversing reel devices (9, 8) are reversed.

## Revendications

1. Installation pour le laminage à froid de matières à laminer en forme de feuillard, présentant deux cages réversibles (2, 3) associées l'une à l'autre, disposées entre deux bobineuses réversibles (8, 9) sans disposition intermédiaire d'autres dispositifs, et une bobineuse (10) dont la bande peut être déroulée, les deux cages réversibles (2, 3) étant réglées simultanément, pour la réalisation du processus de laminage, de manière correspondante à des passes successives et les cages réversibles (2, 3) étant équipées de dispositifs de remplacement rapide des cylindres de travail (14, 15, 16) via lesquels les cylindres de travail, pourvus d'empoises construites selon un mode de construction en cassette, peuvent être remplacés dans un procédé de poussée continue durant la rectification, et un remplacement par des cylindres de travail (4, 4'; 5, 5') de différents diamètres et/ou de rugosités de surface différentes étant possible.

2. Installation selon la revendication 1, caractérisée en ce qu'il s'agit, pour les cages réversibles (2, 3) de cages quarto, dont les cylindres de soutien (6, 6' ; 7, 7') sont entraînés et dont les cylindres de travail (4, 4'; 5, 5') ou les cylindres de soutien peuvent être déplacés dans le sens horizontal pour la stabilisation horizontale à partir du plan vertical formé par une série de cylindres de travail (4, 4' ou 5, 5') ou d'une série de cylindres d'appui (6, 6' ou 7, 7').

3. Installation selon la revendication 1, caractérisée en ce qu'il s'agit, pour les cages réversibles, de cages sexto, dont les cylindres intermédiaires sont entraînés et dont les cylindres de travail ou les cylindres intermédiaires peuvent être déplacés dans le sens horizontal pour la stabilisation horizontale à partir du plan vertical formé par une série de cylindres de travail ou une série de cylindres intermédiaires.

4. Installation selon la revendication 1 ou 2, caractérisée en ce que les cylindres de travail (4, 4'; 5, 5') et/ou les cylindres de soutien (6, 6' ; 7, 7') sont équipés de dispositifs d'entraînement pour le déplacement axial et que les cylindres pouvant être déplacés présentent de préférence un polissage CVC.

5. Installation selon la revendication 1 ou 3, caractérisée en ce que les cylindres de travail et/ou les cylindres intermédiaires sont équipés de dispositifs d'entraînement pour le déplacement axial et que les cylindres pouvant être déplacés présentent de préférence un polissage CVC.

6. Installation selon l'une quelconque des revendications 1 à 5, caractérisée en ce qu'on a disposé un dispositif de décapage par poussée (17) en amont de la bobineuse (10, 10').

7. Installation selon l'une quelconque des revendications 1 à 6, caractérisée en qu'il s'agit, pour la bobineuse (10, 10') d'un dévidoir-enrouleur (10').

8. Procédé pour le laminage réversible à froid de matières à laminer en forme de feuillard dans une installation présentant deux cages réversibles (2, 3) disposées entre deux bobineuses réversibles (8, 9) et une bobineuse (10) dont la bande peut être déroulée, les deux cages réversibles (2, 3) étant réglées simultanément, pour la réalisation du processus de laminage de manière correspondante, à des passes successives et la bande étant déroulée de la bobineuse (10) et laminée, dans les cages réversibles (2, 3) associées l'une à l'autre sans la disposition intermédiaire d'autres dispositifs en chaque fois une passe, un niveau de traction élevé de la bande étant réglé entre les cages réversibles (2, 3) correspondant au comportement de réduction d'un laminoir tandem à quatre à six cages et la bande quittant la cage réversible (3) étant enroulée sur la bobineuse réversible (9) associée, les cages réversibles (2, 3) et la bobineuse réversible (9) étant inversées après le déroulement de la bande de la bobineuse (10) et la bande étant ensuite déroulée de cette bobineuse réversible (9), laminée dans les cages réversibles (3, 2) et bobinée sur l'autre bobineuse réversible (8), en réglant entre les cages réversibles (3, 2) le niveau de traction de la bande élevé et les cages réversibles (3, 2) et les deux bobineuses réversibles (9, 8) étant inversées après le déroulement de la bande de la première bobineuse réversible (9).
